# EUROPÄISCHE PATENTANMELDUNG

(11) **EP 4 603 784 A1**
(43) Veröffentlichungstag der Anmeldung: **20.08.2025**
(21) Anmeldenummer: 25151931.0
(22) Anmeldetag: 15.01.2025
(51) Int. Cl.: F41H 11/10, F41H 11/12, F42B 23/04

(54) **VERFAHREN ZUM LUFTGESTÜTZTEN VERLEGEN VON PANZERSPERREN MIT HILFE VON PANZERABWEHRMINEN**

(30) Priorität: 13.02.2024 DE 102024103975
(71) Anmelder: OWR Odenwaldwerke Rittersbach GmbH, 74834 Rittersbach (DE)
(72) Erfinder: Gurt, Erhard, 74831 Gundelsheim (DE)
(74) Vertreter: Kesselhut, Wolf

(57) **Zusammenfassung**

Die Erfindung betrifft ein Verfahren zum luftgestützten Verlegen von Panzersperren mit Hilfe von Panzerabwehrminen (40) unter Verwendung eines unbemannten hochautomatisierten, senkrechtstartfähigen Luftfahrzeugs (1), welches eine Magazin-Kopplungseinrichtung (2) besitzt, die dazu eingerichtet ist, ein Panzerabwehrminenmagazin (30) mechanisch mit dem Luftfahrzeug (1) zu koppeln oder von diesem zu entkoppeln, wobei das Panzerabwehrminenmagazin (30) ein Gehäuse (32) mit einer Vielzahl von darin angeordneten Minen-Aufnahmeplätzen (34) für jeweils eine Panzerabwehrmine (40) umfasst und jedem Minen-Aufnahmeplatz (34) jeweils eine durch eine Steuerungseinrichtung (28) betätigbare Minenfreigabeeinrichtung (36) zugeordnet ist, die dazu eingerichtet ist, eine an einem Minen-Aufnahmeplatz (34) aufgenommene Panzerabwehrmine (40) für den Transport mechanisch mit dem Panzerabwehrminenmagazin (30) zu koppeln und zum Absetzen der Panzerabwehrmine (40) an einer vorgegebenen Absetzposition (50.1, 50.n) von diesem zu entkoppeln,
**gekennzeichnet** durch die folgenden Verfahrensschritte:
a) Befestigen des mit einer Vielzahl von Panzerabwehrminen (40) befüllten Panzerabwehrminenmagazins (30) am Luftfahrzeug (1) mittels der Magazin-Kopplungseinrichtung (2), insbesondere an dessen Unterseite, b) senkrechtes Starten des Luftahrzeugs 1 und Verbringen desselben mit dem befüllten Panzerabwehrminenmagazin (30) auf dem Luftweg zu einer vorgegebenen Absetzposition (50.1, 50.n) einer Panzerabwehrmine (40), c) senkrechtes Absenken des Luftfahrzeugs (1) über der Absetzposition (50.1, 50.n) und Absetzen einer Panzerabwehrmine (40) aus einem Minen-Aufnahmeplatz (34) heraus auf dem Boden durch mechanisches Entkoppeln der Minenfreigabeeinrichtung (36), d) Entfernen des Luftfahrzeugs (1) von der Absetzposition (50.1, 50.n), e) Anfliegen einer weiteren Minenabsetzposition (50.1, 50.n) und Wiederholen der Verfahrensschritte c) bis d). Die Erfindung betriff ferner ein Luftfahrzeug (1) zur Durchführung des Verfahrens.

## Beschreibung

Die Erfindung betrifft Verfahren zum luftgestützten Verlegen von Panzersperren mit Hilfe von Panzerabwehrminen unter Verwendung eines unbemannten, hochautomatisierten Luftfahrzeugs gemäß dem Oberbegriff von Anspruch 1.

Bei militärischen Konflikten kommen seit Jahrzehnten bekanntermaßen Panzerminen zum Einsatz, die dazu dienen, einen mit Kampffahrzeugen angreifenden Gegner in seiner Bewegung zu hemmen. Die dazu in der Vergangenheit praktizierten Arten des Verlegens von Panzerabwehrminen sind insbesondere
- die Verlegung der Panzerminen von Hand,
- die Verlegung der Panzerminen mittels eines Minenverleger-Anhängers, wie beispielsweise dem Minenverlegesystem 85 der Bundeswehr,
- der Abwurf der Panzerminen mit Hilfe von bodengebundenen Wurfeinrichtungen, wie z.B. dem Minenwurfpanzer Skorpion der Bundeswehr,
- der Abwurf aus einem Flugzeug mit hoher Geschwindigkeit (> 350 km/h), oder
- der Abwurf der Panzerminen mit Hilfe von Boden-Boden-Raketen, wie z.B. dem mehr als 30 Jahre alten MLRS-System der Bundeswehr, welche die Panzerminen als Subrnunition mittels Streuung ausbringen.

Aus der EP 1189011 Al ist ein Verfahren zur Installation und zum Überwachen eines umfassenden Sperrsystems mit mindestens zwei im Gelände verteilt installierten Minen, bekannt, die einen bestimmten Bereich dieses Geländes vor dem Eindringen feindlicher Fahrzeuge schützen sollen. Bei dem System werden bei der Installation der Minen im Gelände die geographischen Koordinaten der Position jeder einzelnen Mine bestimmt und gemeinsam mit einem nur dieser Mine zugeordneten Identifizierungscode gespeichert, wodurch ihre Position im Gelände identifiziert und registriert wird.

Die Auslösung der Minen erfolgt in der Regel durch mindestens einen Sensor. Neben Überfahrsensoren, die einen körperlichen Kontakt mit einem Fahrzeug registrieren, werden berührungslos arbeitende Sensoren eingesetzt. Einmal installiert, arbeiten derartige Minen völlig autonom.

Aus der DE 29 08 360 Cl sind weiterhin Minen bekannt, die ausschließlich auf einen körperlichen Kontakt reagieren.

Ein mit Panzerabwehrminen gesperrter Geländeabschnitt bildet einen erheblichen taktischen Nachteil für den angreifenden Gegner. Einerseits wird dadurch der Schwung des gegnerischen Angriffs verlangsamt, bzw. zum Stoppen gebracht. Andererseits werden gegnerische Kräfte vor der Minensperre gebunden, so dass sie z.B. mit Artilleriefeuer bekämpft werden können. Aufgrund dieses taktischen Nachteils haben gegnerische Kräfte ein besonderes Interesse daran, das Verlegen von Panzerminen zu stören. Deshalb sind die eigenen Kräfte, die zur Minenverlegung eingesetzt werden, besonders gefährdet.

Ein Problem welches mit den zuvor beschriebenen Arten des Verlegens von Panzerabwehrminen einher geht, ist darin zu sehen, dass die Verlegung von Hand ein hohes Gefahrenpotential für die eigenen Kräfte darstellt, und die automatisierten Verfahren nur eine geringe Präzision bei der Verlegung einer größeren Anzahl von Panzerminen in einem vorgegebenen Gebiet erlauben.

Demgemäß ist es eine Aufgabe der vorliegenden Erfindung, ein Verfahren zu schaffen, mit welchen sich Panzerabwehrminensperren mit einem geringen Gefahrenpotential und mit hoher Präzision installieren lassen.

Diese Aufgabe wird erfindungsgemäß durch ein Verfahren mit den Merkmalen von Anspruch 1 gelöst.

Eine weitere Aufgabe der Erfindung ist es, ein Luftfahrzeug zur Durchführung des Verfahrens bereit zu stellen.

Diese Aufgabe wird erfindungsgemäß durch ein unbemanntes hochautomatisiertes und senkrechtstartfähiges Luftfahrzeug mit den Merkmalen von Anspruch 10 gelöst.

Weitere Merkmale der Erfindung sind in den Unteransprüchen beschrieben.

Um das Gefahrenpotential bei der Verlegung von Panzerabwehrminen für die eigenen Kräfte zu minimieren, wird bei dem erfindungsgemäßen Verfahren ein unbemanntes Luftfahrzeug verwendet, insbesondere einer rotorbetriebene Drohne, die eine Vielzahl von Panzerabwehrminen gleichzeitig aufnehmen und diese dann mit hoher Präzision einzeln an vorbestimmten Punkten eines für die Durchfahrt von Panzern zu sperrenden Gebiets absetzen und aktivieren kann. Als unbemanntes Luftfahrzeug ("Drohne") wird hierbei bevorzugt ein Drehflügler eingesetzt, welcher bevorzugt in Anlehnung an die Norm SAE J3016 als hochautomatisiert ist. Demgemäß ist das unbemannte Luftfahrzeug, das zur Durchführung des erfindungsgemäßen Verfahrens verwendet wird, in dem Maße automatisiert, dass es standardisierte Flugmanöver mittels einer darin enthaltenden elektronischen Steuerungsvorrichtung, die im Stand der Technik auch als Flight Controller bezeichnet wird, vollständig autonom durchführen kann. Das umfasst insbesondere das vollautomatisierte Anfliegen der Ablagepunkte und die vollautomatisierte Verlegung von Minen nach Eingabe der erforderlichen geographischen Koordinaten wenigstens eines, bevorzugt jedoch aller Ablagepunkte in die Software der Drohne.

Gemäß dem erfindungsgemäßen Verfahren besitzt das unbemannte, hochautomatisierte, senkrechtstartfähige Luftfahrzeug hierzu eine Magazin-Kopplungseinrichtung, insbesondere eine motorisch betätigbare Greifereinrichtung, die dazu eingerichtet ist, ein Panzerabwehrminenmagazin mechanisch mit dem Luftfahrzeug zu koppeln oder von diesem zu entkoppeln.

Das Panzerabwehrminenmagazin weist ein Gehäuse mit einer Vielzahl von darin angeordneten Minen-Aufnahmeplätzen für jeweils eine Panzerabwehrmine auf. So können z.B. 10 bis 30 Minen-Aufnahmeplätze im Gehäuse vorgesehen sein. Jedem Minen-Aufnahmeplatz ist hierbei jeweils eine durch eine Steuerungseinrichtung betätigbare Minenfreigabeeinrichtung zugeordnet, die dazu eingerichtet ist, eine an einem Aufnahmeplatz im Panzerminenmagazin aufgenommene Panzerabwehrmine für den Transport mechanisch mit dem Panzerabwehrminenmagazin zu koppeln und zum Absetzen der Panzerabwehrmine an einer vorgegebenen Absetzposition von diesem zu entkoppeln.

Das Verfahren zeichnet sich durch folgende Verfahrensschritte aus:
a) Befestigen des Panzerabwehrminenmagazins, welches mit einer Vielzahl von nicht aktivierten Panzerabwehrminen befüllt ist, mittels der Magazin-Kopplungseinrichtung am Luftfahrzeug, insbesondere an der Unterseite des Luftfahrzeugs, bevorzugt zwischen den Kufen oder Rädern des Landegestells, welches an der Unterseite des Rumpfes angeordnet ist,
b) senkrechtes Starten des Luftahrzeugs und Verbringen desselben mit dem befüllten Panzerabwehrminenmagazin auf dem Luftweg zu einer vorgegebenen Absetzposition einer Panzerabwehrmine,
c) senkrechtes Absenken des Luftfahrzeugs über der Absetzposition und Absetzen einer Panzerabwehrmine aus einem Minen-Aufnahmeplatz heraus auf dem Boden durch mechanisches Entkoppeln der Minenfreigabeeinrichtung,
d) Entfernen des Luftfahrzeugs von der Absetzposition,
e) Anfliegen einer weiteren Minenabsetzposition und Wiederholen der Verfahrensschritte c) bis d) solange, bis die letzte Panzerabwehrmine aus dem Magazin abgesetzt wurde.

Anders als bei den bisher bekannten luftgestützten Verfahren (Flugzeug, Boden-BodenRakete, s. oben) erfolgt die Verlegung der Panzerabwehrminen bei dem erfindungsgmäßen Verfahren dabei hochpräzise, da das senkrecht startfähige, d.h. in der Regel rotorbetriebene hochautomatisierte Luftfahrzeug, das nachfolgend auch als Drohne bezeichnet wird, den genauen Absetzpunkt einer jeden einzelnen Mine zielgerichtet anfliegen, über diesem verharren und die Mine dann präzise ablegen kann, bevor es einen nächsten Absetzpunkt anfliegt, um an diesem eine weitere Panzerabwehrmine abzulegen.

Wie die Anmelderin erkannt hat, ergeben sich hierdurch neue taktische Einsatzzwecke, da die präzise luftgestützte Ablage dazu geeignet ist, exakte Geländeabschnitte und Engstellen zu sperren. Im Gegensatz dazu kann z.B. bislang mit Flugzeugen lediglich ein länglicher Gelände-Abschnitt, wie z.B. eine Start-/Landebahnen gesperrt werden; und mit den bekannten Boden-Boden-Raketen kann lediglich nur ein kreisrunder, unpräziser Abschnitt abgedeckt werden.

Nach einem weiteren der Erfindung zugrunde liegenden Gedanken können die Panzerminen nach dem Absetzen derselben aus dem Panzerabwehrminenmagazin durch einen Zeitzünder und/oder alternativ durch eine mechanische Aktivierungsvorrichtung, wie einen Hebel, oder auch durch Übersenden eines bevorzug kodierten elektromagnetischen Aktivierungssignals, insbesondere Funksignals, oder eines optischen Aktivierungssignals, welches durch eine Sendeeinrichtung im Luftfahrzeugt bereitgestellt wird, aktiviert werden. Die Minen sind im letzten Fall mit einer entsprechenden Empfangsvorrichtung und/oder Elektronik ausgestattet, die die Mine genauso wie der Zeitzünder oder auch die mechanische Aktivierungsvorrichtung nach der Aktivierung scharf schaltet.

Gemäß einer weiteren Ausführungsform des erfindungsgemäßen Verfahrens kann das Luftfahrzeug eine Positionserfassungseinrichtung enthalten, insbesondere einen GPS-Empfänger, welche die aktuelle Position des Luftfahrzeugs nach dem Absetzen einer Panzerabwehrmine aus dem Panzerabwehrminenmagazin in einer elektronischen Speichereinrichtung im Luftfahrzeug ablegt, oder die aktuelle Position als verschlüsseltes Signal an einen entfernt vom Luftfahrzeug angeordneten Positionsdaten-Speichereinrichtung übersendet, in welchem bevorzugt die Positionsdaten einer jeden aus dem Panzerabwehrminenmagazin entnommenen Panzerabwehrmine abgespeichert werden und zum Wiederauffinden der Mine bei Bedarf entnommen werden können, d.h. abrufbar sind.

Bei einer weiteren Ausführungsform des erfindungsgemäßen Verfahrens ist es vorgesehen, dass das Luftfahrzeug nach dem Absetzen der letzten Panzerabwehrmine des Panzerabwehrminenmagazins autonom zu einer Lagerstätte für Panzerabwehrminenmagazine zurückfliegt, um dort das verbrauchte leere Magazin abzulegen und bevorzugt danach ein neues Magazin, das mit einer entsprechenden Vielzahl von Panzerabwehrminen gefüllt ist, aufzunehmen. Das Absetzen des leeren und aufnehmen eines neuen befüllten Panzerabwehrminenmagazins erfolgt dabei bevorzugt automatisiert, in dem die Magazin-Kopplungseinrichtung durch eine entsprechende Steuerungseinrichtung im Luftfahrzeug, oder auch im Gehäuse des Magazins betätigt, d. h. durch entsprechende Aktuatoren geöffnet und geschlossen wird. Hierdurch ergibt sich der Vorteil, dass die Lagerstätte, die, beispielsweise ein Anhänger mit einer entsprechenden Transportbox für mehrere Magazine sein kann, gut getarnt auf eigenem Gebiet in hinreichendem Abstand von den Frontlinien positioniert werden kann.

Um die Absetzpositionen vom Luftfahrzeug automatisiert anfliegen zu können, werden die Positionsdaten der vorgegebenen Absetzpositionen der Panzerabwehrminen eines befüllten Magazins bevorzugt in einem Speicher der Flugsteuerungseinrichtung des Luftfahrzeugs abgespeichert. Aus diesem werden die Positionsdaten nacheinander der Flugsteuerungseinrichtung zugeführt, welche die zuletzt ausgelesenen Daten - durch das Betätigen der Minenfreigabeeinrichtung getriggert - als neue Zielkoordinaten einliest, wie dies von derartigen Drohnen her bekannt ist. Diese neuen Zielkoordinaten fliegt das hochautomatisierte senkrechtstartfähige Luftfahrzeug danach autonom an und setzt an einer jeder dieser Positionen eine nächste der im Magazin verbliebenen Panzerabwehrminen aus dem Magazin gemäß den Verfahrensschritten c) bis e) ab.

Hierdurch ergibt sich der Vorteil, dass das Luftfahrzeug nicht über eine entsprechende Funkverbindung durch einen Drohnenpiloten auf Sicht gesteuert werden muss, sodass der Einsatz von Störsendern, mit denen die Funk- und auch Videoverbindung zu den Drohnen ansonsten vergleichsweise leicht gestört oder gar unterbrochen werden kann, keine Auswirkungen auf den sicheren Betrieb des Luftfahrzeugs hat.

Gleichzeitig oder alternativ kann es vorgesehen sein, dass die Positionsdaten für die Absetzpositionen von einem bevorzugt im Luftfahrzeug angeordneten Rechner aus Bilddaten errechnet werden, die mit einer am Luftfahrzeug angeordneten Kamera erfasst werden. Dies ermöglicht es, die gewünschten Absetzpositionen ohne eine genaue vorhergehende Kenntnis der möglicher Weise veränderten örtlichen Gegebenheiten am Absetzort zu lokalisieren und beispielsweise bei einer Beschädigung eines zu sperrenden Zufahrtweges die finale Absetzposition autonom durch die Flugsteuerung zu korrigieren. Hierdurch lässt sich die Qualität der Panzersperren erheblich verbessern und auch die Gefahr eines Verlustes des Luftfahrzeugs stark verringern, da dieses beispielsweise ein am geplanten Absetzort angeordnetes Hindernis selbstständig erkennen und autonom umfliegen kann, wie dies heutzutage bei den meisten Drohnen im privaten sowie auch kommerziellen Bereich üblich ist.

Nach einem weiteren der Erfindung zugrunde liegenden Gedanken besitzen die Panzerabwehrminen jeweils eine Aktivierungseinrichtung zum Scharfstellen der Minen, welche bevorzugt mit einer Aktivierungsanzeigevorrichtung gekoppelt ist, wie insbesondere einem mechanischen Indikator, z.B. einem umlegbaren Hebel, der durch oder nach dem Absetzen der Panzerabwehrmine aus dem Magazin automatisiert betätigt wird und die Aktivierungseinrichtung betätigt und bevorzugt auch gleichzeitig den Aktivitätszustand der Mine anzeigt. Hierdurch eröffnet sich die Möglichkeit, dass nach dem Absetzen der Minen die installierte Panzersperre vom Luftfahrzeug noch einmal autonom überflogen und die Aktivierung sämtlicher Minen einer Panzersperre beispielsweise über die zuvor erwähnte Kamera und eine entsprechende Bildverarbeitungssoftware bevorzugt autonom verifiziert werden kann.

Gemäß einer weiteren vorteilhaften Ausführungsform des Verfahrens ist das Magazin an der Unterseite des Luftfahrzeugs aufnehmbar, und die Magazin-Kopplungseinrichtung als ein motorisch betätigbarer Greifer, Haken oder als elektromagnetische Kopplungseinrichtung oder eine elektrisch aktivierbare Magnethalterung, bzw. als ein Elektromagnet ausgeführt, welcher/welche form- und/oder reibschlüssig mit dem Gehäuse des Magazins koppelbar ist. Um ein neues, mit Panzerabwehrminen befülltes Magazin aufzunehmen, wird das Luftfahrzeug über dieses in der Aufsicht bevorzugt rechteckige Magazin bewegt, abgesenkt, und die Magazin-Kopplungseinrichtung geschlossen.
1.
   Die Erfindung wird nachfolgend mit Bezug auf die Zeichnungen anhand einer bevorzugten Ausführungsformen beschrieben. In den Zeichnungen zeigen:
   - Fig. 1: eine schematische Seitendansicht des erfindungsgemäßen senkrechtstartfähigen Luftfahrzeugs, welches über einer Lagerstätte für Panzerabwehrminenmagazine in Form eines Transportanhängers schwebt.
   - Fig. 2: das Luftfahrzeugt von Fig. 1 nach dem Absenken und Ankoppeln des befüllten Panzerabwehrminenmagazins auf dem Transportanhänger,
   - Fig. 3: das Luftfahrzeugt von Fig. 1 nach dem Abheben vom Transportanhänger mit dem angekoppelten Magazin,
   - Fig. 4: eine schematische Ansicht der Unterseite des Luftfahrzeugs mit angekoppeltem, vollständig befülltem Panzerabwehrminenmagazin,
   - Fig. 5a: das Luftfahrzeug beim Absetzen einer ersten Panzermine an einer ersten vorbestimmten Absetzposition,
   - Fig. 5b: ein erfindungsgemäßes Luftfahrzeug beim Scharfstellen einer zuvor abgesetzten Panzerabwehrmine mittels eines übersandten Funksignals gemäß einer optionalen Ausführungsform,
   - Fig. 5c: das Luftfahrzeug von Fig. 5a beim Absetzen einer letzten Panzermine aus dem Magazin, und
   - Fig. 6: den Rückflug des Luftfahrzeugs mit vollständig entleertem Panzerabwehrminenmagazin nach dem Absetzen aller Minen.

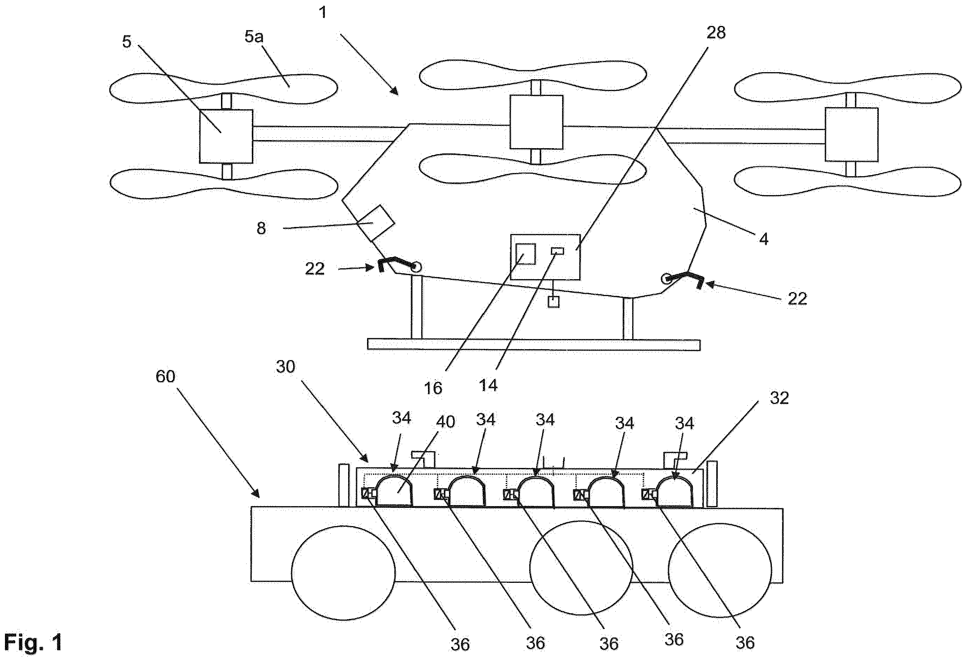

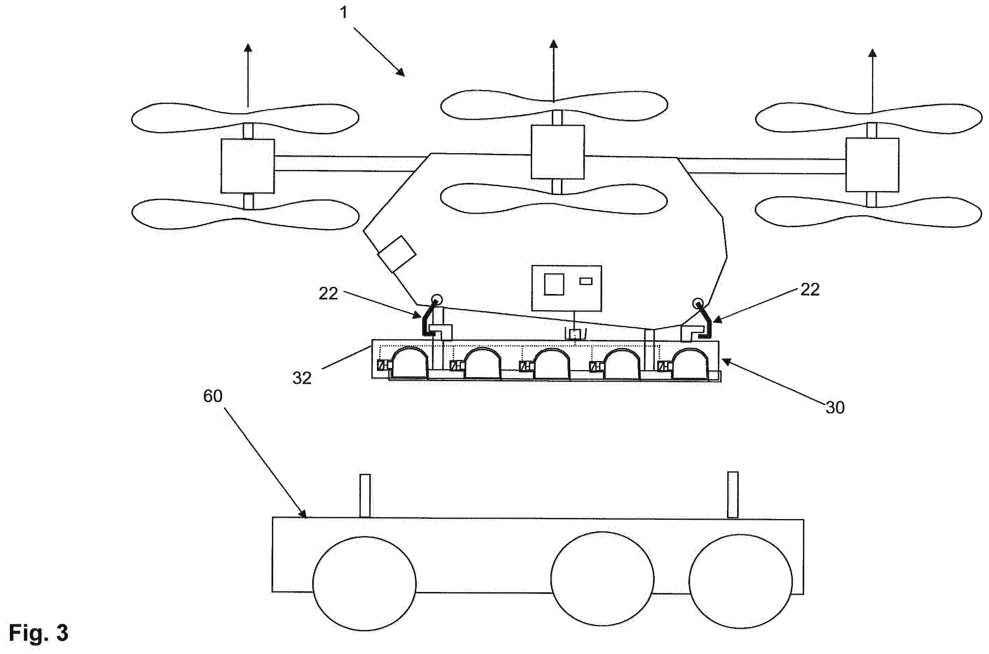

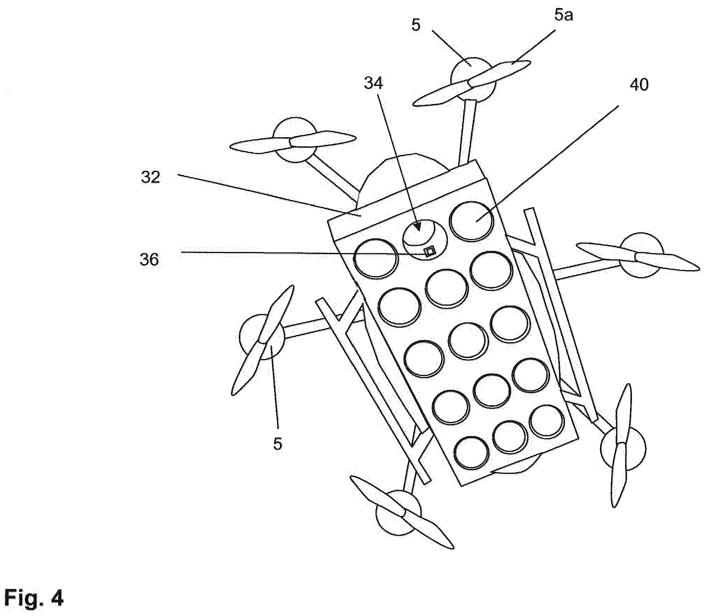

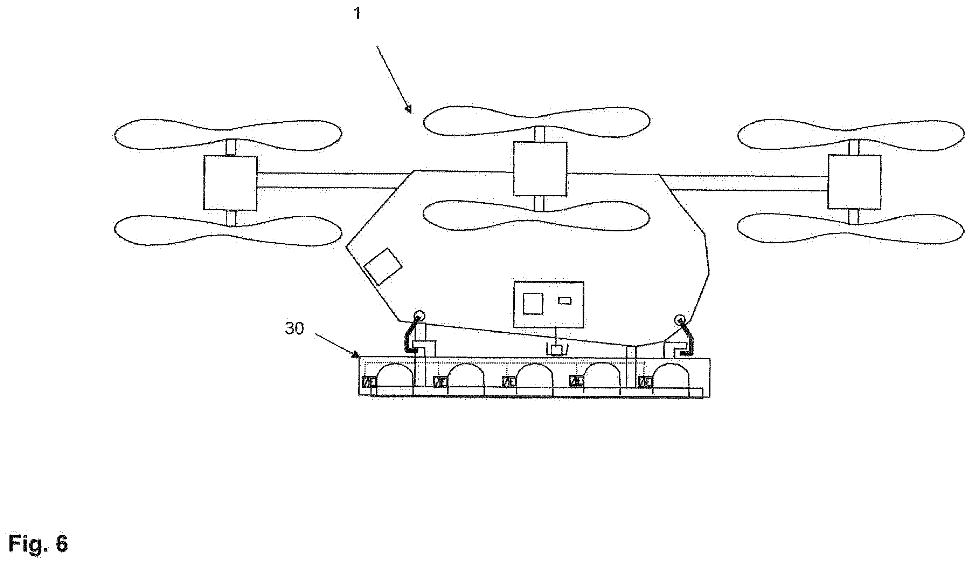

Wie in den Figuren 1 bis 6 gezeigt ist, umfasst ein unbemanntes hochautomatisiertes und senkrechtstartfähiges Luftfahrzeug 1 einen Rumpf 4 mit einer Vielzahl von daran angeordneten, jeweils durch einen Motor 5 antreibbaren Propellern 9a und ein mit dem Rumpf 4 über eine Magazin-Kopplungseinrichtung 2, insbesondere Greifereinrichtung mechanisch koppelbares Panzerabwehrminenmagazin 30. Wie in Fig. 1 und 4 angedeutet ist, besitzt dieses ein Gehäuse 32 mit einer Vielzahl von darin angeordneten Minen-Aufnahmeplätzen 34, die z.B. als nach unten hin offene Schächte ausgeführt sind, in denen jeweils eine bekannte, und in den Figuren lediglich schematisch dargestellte Panzerabwehrmine 40 aufgenommen werden kann. Jedem Minen-Aufnahmeplatz 34 ist jeweils Minenfreigabeeinrichtung 36 zugeordnet, die durch eine Steuerungseinrichtung 28 individuell betätigt werden kann ist, um die an dem jeweiligen Aufnahmeplatz 34 im Panzerabwehrminenmagazin 30 aufgenommene Panzerabwehrmine 40 für den Transport mechanisch mit dem Panzerabwehrminenmagazin 30 zu koppeln. Die Minenfreigabeeinrichtung 36 ist in den Figuren lediglich beispielhaft und schematisch als ein über einen Aktuator, z.B. einen Elektromagneten oder Stellmotor, bewegbarer Klemmschieber dargestellt. Dieser drückt in der Klemmstellung von außen auf das Minengehäuse und drängt dieses im Aufnahmeschacht des Aufnahmeplatzes gegen die Innenwand, wodurch die Mine 30 mechanisch verklemmt wird. Gleichzeitig oder alternativ kann die Mine im Aufnahmeschacht mechanisch formschlüssig gegen ein Herausrutschen gesichert werden, indem der Schieber einen nicht näher gezeigten Vorsprungs hintergreift. Die zuvor beschrieben Sicherungsmöglichkeiten sind jedoch lediglich rein beispielhaft.

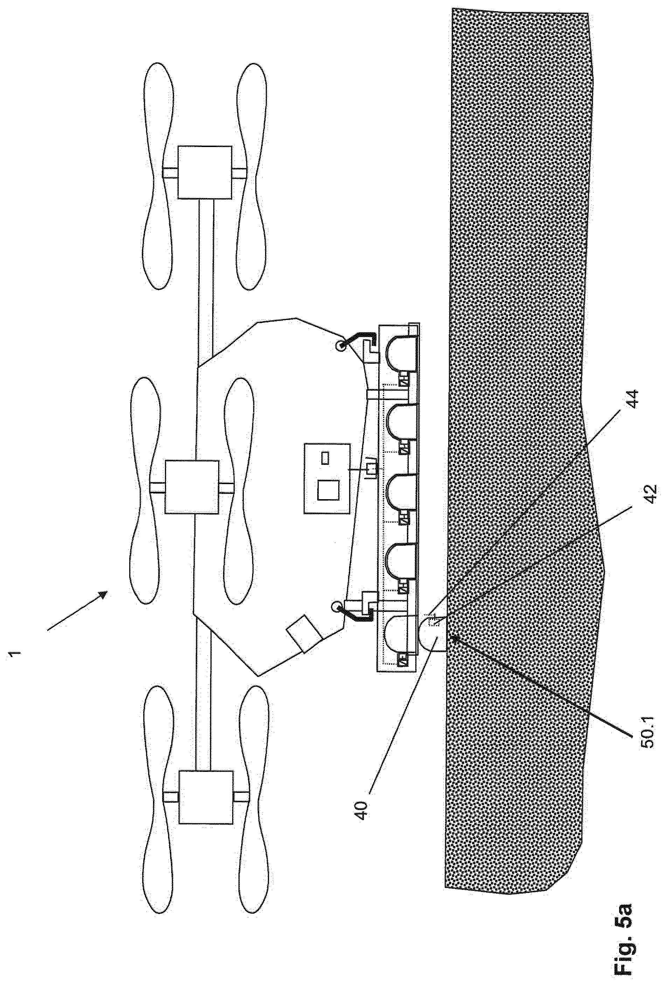

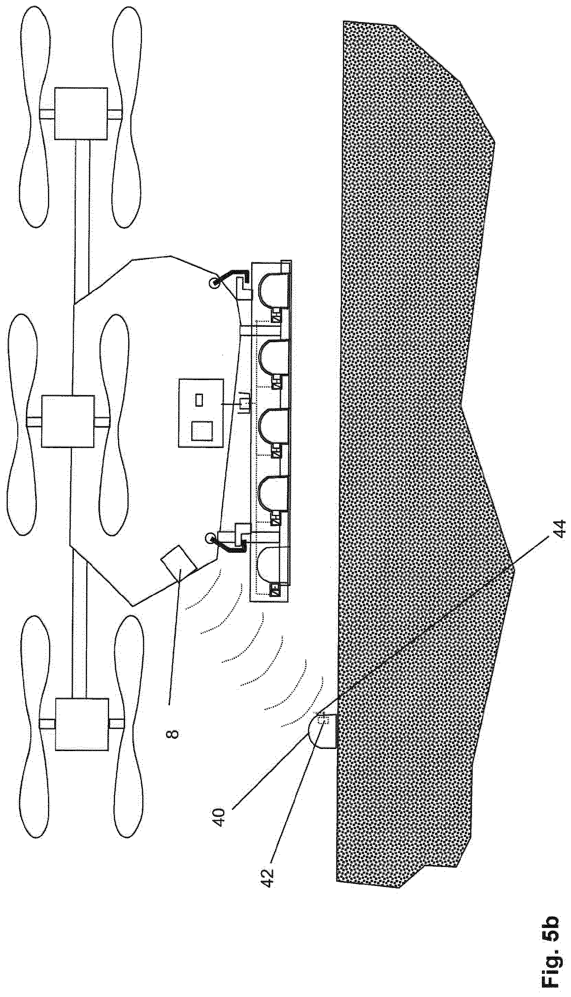

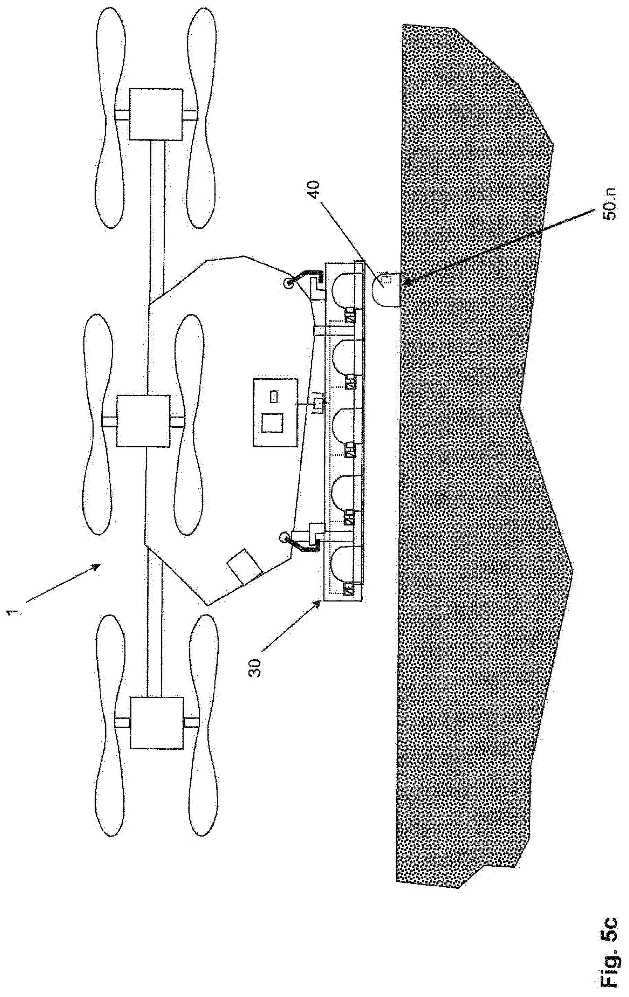

Zum Absetzen der Panzerabwehrminen 40 an einer vorgegebenen Absetzposition 50.1 bis 50.n wird der Klemmschieber hingegen über die Steuerungseinrichtung 28 sowie die in den Figuren lediglich als punktierte Linien angedeuteten Steuerleitungen zurückgezogen und die Klemmverbindung gelöst, so dass die Mine 30 freigegeben wird. Dadurch kann die Mine 40 vom Magazin 30 entkoppelt und nach unten hin durch die Schwerkraft aus dem Aufnahmeplatz 34 d herausbewegt werden, wenn das Luftfahrzeug 1 in geringer Höhe über der Absetzposition 50.1 bis 50.n schwebt, wie dies in Fig. 5a und 5c gezeigt ist. Hierbei ist in jeder der Minen bevorzugt eine Aktivierungseinrichtung 42 zum Scharfschalten der Mine angeordnet, die durch oder nach dem Absetzen der Panzerabwehrmine 40 aus dem Magazin 30 aktiviert wird. Um den Zustand der jeweiligen Mine 30 nach dem Absetzen überprüfen zu können, weist diese bevorzugt eine mit der Aktivierungseinrichtung 42 gekoppelte Anzeigevorrichtung 44 auf, die beispielsweise einen in Fig. 5b angedeuteten Hebel 44 umfassen kann, der z.B. nach dem Absetzen der Mine durch einen Federmechanismus in die Aufwärtsposition rotiert wird und dadurch die Aktivierungseinrichtung 42 betätigt, welche die Mine 30 in dieser Stellung scharf schaltet. Im Aufnahmeschacht des Aufnahmeplatzes kann der Hebel 44 durch die Anlage an der Innenwand des Schachts während des Flugs in der deaktivierten Stellung der Aktivierungseinrichtung 42 fixiert werden. Hierdurch ergibt sich der Vorteil, dass das Scharfschalten der Minen 30 rein mechanisch und automatisch erfolgt, wenn die Mine 30 nach der Betätigung der Minenfreigabeeinrichtung 36 an der Absetzposition 50.1, 50.n nach unten aus dem Schacht herausrutscht. Es versteht sich, dass die zuvor beschriebene Ausfuhrungsform nur exemplarisch ist und die Aktivierung/Deaktivierung der Minen 30 auch auf andere Weise, insbesondere durch die Übertragung von bevorzugt verschlüsselten elektromagnetischen Signalen erfolgen kann, die durch eine Sendeeinrichtung 8 im Luftfahrzeug 1 ausgesandt werden, wie dies in Fig. 5b angedeutet ist.

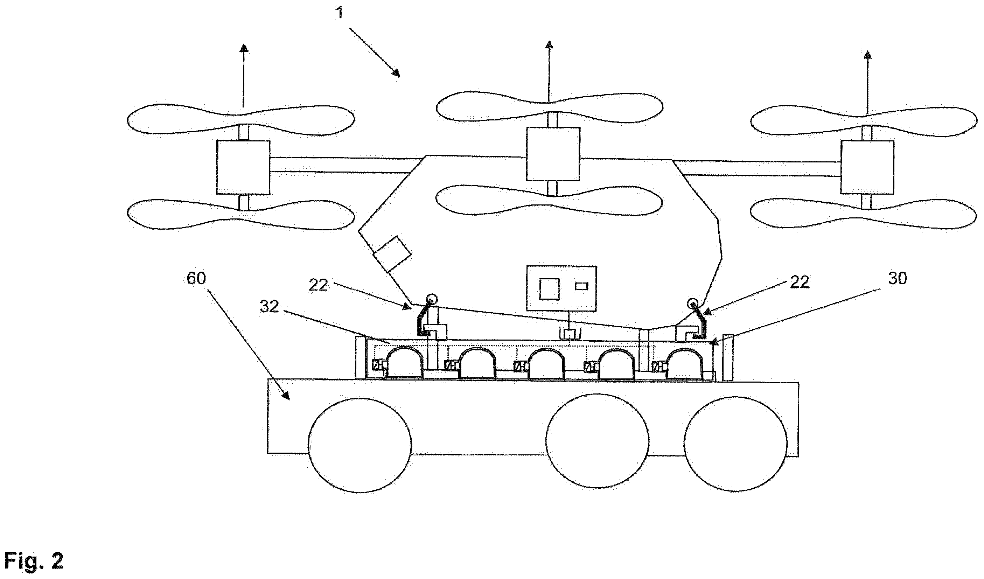

Das Luftfahrzeug 1 umfasst weiterhin eine Magazin-Kopplungseinrichtung 2, die beispielsweise eine in den Figuren lediglich schematisch angedeutete Greifereinrichtung sein kann, welche ein mit Minen 40 gefülltes Magazin 30 in der geschlossenen Stellung (Fig. 2) für den Transport mit dem Rumpf 4 des Luftfahrzeugs 1 koppelt, bzw. in der Freigabeposition (Fig. 1) ein entleertes Magazin 30 freigibt und dadurch vom Luftfahrzeug 1 entkoppelt.

Das grundsätzliche Anlegen einer Panzersperre wird nachfolgend anhand der bevorzugten Ausführungsform des Verfahrens beschrieben.

Wie in Figur 1 gezeigt ist, wird das erfindungsgemäße Luftfahrzeug 1 zunächst über das mit Panzerabwehrminen 40 befüllte Magazin 30 bewegt, welches sich auf einer entfernt von den Absetzpositionen befindlichen Lagerstätte 60 befindet, die in den Zeichnungen beispielhaft als Anhänger dargestellt ist.

Nach dem Absenken des Luftfahrzeugs 1 wird die zuvor geöffnete Magazin-Koppeleinrichtung 22 aktiviert und die schematisch angedeuteten Greifer unter die entsprechenden Vorsprünge an der Oberseite des Magazins 30 bewegt, sodass dieses, wie in Figur 2 gezeigt, formschlüssig mit dem Luftfahrzeug 1 gekoppelt ist.

Im Anschluss daran wird das Luftfahrzeug 1 durch die zugehörige Steuerungseinrichtung 28 autonom senkrecht in Aufwärtsrichtung bewegt und ebenfalls auf dem Luftweg zur ersten Absetzpositionen 50.1 geflogen, welche zuvor in einer elektronischen Speichereinrichtung 16 für Positionsdaten im Luftfahrzeug 1 abgespeichert wurde.

An der ersten Absetzpositionen 50.1 wird das Luftfahrzeug 1 dann, wie in Figur. 5a gezeigt, senkrecht bis auf oder zumindest wenige Zentimeter über dem Boden abgesenkt und die Minenfreigabeeinrichtung 36 für eine erste, an der ersten Absetzpositionen 50.1 abzusetzende Panzerabwehrmine 40 betätigt und die Mine 40 im Schacht des Aufnahmeplatzes 34 freigegeben. Danach wird das Luftfahrzeug 1 durch die Steuerungseinrichtung 28 autonom wieder in Aufwärtsrichtung bewegt, wodurch die freigegebene Panzermine 40 aus dem Schacht des Aufnahmeplatzes 34 heraus auf den Boden gelangt. Durch das sich in Aufwärtsrichtung bewegende Luftfahrzeug 1 wird gemäß einer optionalen Ausführungsform der Erfindung ein an der Außenseite der Mine 40 angeordneter, durch nicht näher gezeigte federelastische Mittel in Aufwärtsrichtung gedrängter Hebel 44, der im Aufnahmeschacht des Aufnahmeplatzes 34 beispielsweise durch seine Anlage an der Innenwand in der Abwärtsstellung gehalten wird, in die in Figur 5b angedeutete Aufwärtsstellung bewegt. Durch die Bewegung in diese Aufwärtsstellung wird eine im Inneren der Mine 40 angeordnete Aktivierungseinrichtung 42 betätigt, die die Mine 40 bevorzugt zeitlich verzögert in bekannter Weise scharf schaltet. Hierbei dient der Hebel 44 sowohl zum Umschalten der Aktivierungseinrichtung 42 zwischen der aktivierten Stellung, in der die Mine 40 scharf geschaltet ist, und der nicht aktivierten Transportstellung, als auch zur Anzeige des Aktivierungszustands. Die zuvor beschriebene Betätigung über einen Hebel ist jedoch lediglich beispielhaft und kann auch auf andere Weise mechanisch und/oder auch elektronisch erfolgen.

Zusätzlich oder auch alternativ zu der zuvor beschriebenen Möglichkeit einer Aktivierung der Minen 40 können diese eine nicht näher gezeigte Aktivierungselektronik enthalten, die nach dem Aufsteigen des Luftfahrzeugs 1 durch einen darin angeordneten Sender 8 bevorzugt über ein kodiertes Signal betätigt wird, um die Mine 40 scharf zu schalten oder auch zu deaktivieren, wie dies in Fig. 5b angedeutet ist.

Nach dem Absetzen und Scharfschalten der ersten Mine 40 an der ersten Minenabsetzpositionen 50.1 wird das Luftfahrzeug 1 autonom zu den weiteren Absetzpositionen bewegt und auf diese Weise die Panzersperre installiert, bevor es, wie in Figur 5c gezeigt, die letzte Mine aus dem Magazin 30 an der letzten MinenAbsetzpositionen 50.n in der zuvor beschriebenen Weise absetzt, diese ggf. per Funksignal aktiviert und danach zurück zur Lagerstätte 60 bewegt wird. Dort wird das leere Magazin 30 bevorzugt automatisiert durch Betätigen der Magazin-Kopplungseinrichtung 22 abgelegt und danach ein neues Magazin 30, wie zuvor im Zusammenhang mit Fig. 1 und 2 beschrieben aufgenommen, und die darin enthaltenen Panzerabwehrminen 40 zur Anlage einer weiteren Panzersperre abgesetzt.

### Liste der Bezugszeichen

- 1: senkrecht startfähiges Luftfahrzeug
- 4: Rumpf
- 5: Motor
- 5a: Propeller
- 8: Sendeeinrichtung im Luftfahrzeug
- 14: Positionserfassungseinrichtung/GPS-Empfänger
- 16: elektronische Speichereinrichtung für Positionsdaten
- 22: Magazin-Kopplungseinrichtung
- 28: Steuerungseinrichtung
- 30: Panzerabwehrminenmagazin
- 32: Gehäuse
- 34: Minen-Aufnahmeplatz
- 36: Minenfreigabeeinrichtung
- 40: Panzerabwehrmine
- 42: Aktivierungseinrichtung zum Scharfschalten der Mine
- 44: Aktivierungsanzeige/Hebel zur Betätigung der Aktivierungseinrichtung
- 50.1: erste Absetzposition
- 50.n: letzte Absetzposition
- 60: Lagerstätte für Panzerabwehrminenmagazine/Anhänger

## Patentansprüche

1. Verfahren zum luftgestützten Verlegen von Panzersperren mit Hilfe von Panzerabwehrminen (40) unter Verwendung eines unbemannten hochautomatisierten, senkrechtstartfähigen Luftfahrzeugs (1), welches eine Magazin-Kopplungseinrichtung (2), insbesondere Greifereinrichtung besitzt, die dazu eingerichtet ist, ein Panzerabwehrminenmagazin (30) mechanisch mit dem Luftfahrzeug (1) zu koppeln oder von diesem zu entkoppeln, wobei das Panzerabwehrminenmagazin (30) ein Gehäuse (32) mit einer Vielzahl von darin angeordneten Minen-Aufnahmeplätzen (34) für jeweils eine Panzerabwehrmine (40) umfasst und jedem Minen-Aufnahmeplatz 34 jeweils eine durch eine Steuerungseinrichtung (28) betätigbare Minenfreigabeeinrichtung (36) zugeordnet ist, die dazu eingerichtet ist, eine an einem Minen-Aufhahmeplatz (34) aufgenommene Panzerabwehrmine (40) für den Transport mechanisch mit dem Panzerabwehrminenmagazin (30) zu koppeln und zum Absetzen der Panzerabwehrmine (40) an einer vorgegebenen Absetzposition (50.1, 50.n) von diesem zu entkoppeln,
**gekennzeichnet durch** die folgenden Verfahrensschritte:
a) Befestigen des mit einer Vielzahl von Panzerabwehrminen (40) befüllten Panzerabwehrminenmagazins (30) am Luftfahrzeug (1) mittels der Magazin-Kopplungseinrichtung (2), insbesondere an dessen Unterseite,
b) senkrechtes Starten des Luftahrzeugs (1) und Verbringen desselben mit dem befüllten Panzerabwehrminenmagazin (30) auf dem Luftweg zu einer vorgegebenen Absetzposition (50.1, 50.n) einer Panzerabwehrmine (40),
c) senkrechtes Absenken des Luftfahrzeugs (1) über der Absetzposition (50.1, 50.n) und Absetzen einer Panzerabwehrmine (40) eines Minen-Aufnahmeplatzes (34) auf dem Boden durch mechanisches Entkoppeln der Minenfreigabeeinrichtung (36) des Minen-Aufnahmeplatzes (34),
d) Entfernen des Luftfahrzeugs (1) von der Absetzposition (50.1, 50.n),
e) Anfliegen einer weiteren Minenabsetzposition (50.1, 50.n) und Wiederholen der Verfahrensschritte c) bis d).

2. Verfahren nach Anspruch 1,
**dadurch gekennzeichnet, dass**
die Panzerabwehrminen (40) eine Aktivierungseinrichtung (42) zum Scharfschalten der Minen umfassen, die durch oder nach dem Absetzen der Panzerabwehrmine (40) aus dem Magazin (30) aktiviert wird, und dass bevorzugt eine mit der Aktivierungseinrichtung (42) gekoppelte Anzeigevorrichtung (44) vorgesehen ist, mit welcher der Aktivierungszustand der Panzermine (30) anzeigbar ist.

3. nach Anspruch 2,
**dadurch gekennzeichnet, dass**
die Panzerabwehrmine (40) durch einen mit der Aktivierungseinrichtung (42) gekoppelten Zeitzünder zeitlich versetzt nach dem Absetzen und/oder durch Übersenden eines bevorzug kodierten elektromagnetischen Aktivierungssignals, insbesondere Funksignals und/oder eines optischen Aktivierungssignals, welches durch eine Sendeeinrichtung (8) im Luftfahrzeug 1 bereit gestellt wird, aktiviert wird.

4. Verfahren nach Anspruch 2 oder 3,
**dadurch gekennzeichnet, dass**
die Aktivierungseinrichtung (42) bevorzugt durch einen umlegbaren, federbelasteten Hebel betätigbar ist, dessen Schaltstellung den Aktivitätszustand der Panzerabwehrmine (40) optisch anzeigt.

5. Verfahren nach einem der vorhergehenden Ansprüche,
**dadurch gekennzeichnet, dass**
das Luftfahrzeug (1) eine Positionserfassungseinrichtung (14), enthält insbesondere ein GPS-Empfänger, welche die aktuelle Position des Luftfahrzeugs (1) nach dem Absetzen einer Panzerabwehrmine (40) aus dem Panzerabwehrminenmagazin (30) in einer elektronischen Speichereinrichtung (16) im Luftfahrzeug ablegt, oder eine aktualisierte Absetzposition (50.1, 50.n) als verschlüsseltes Signal an eine entfernt vom Luftfahrzeug (1) angeordnete Positionsdaten-Speichereinrichtung übersendet, aus der die Positionsdaten einer jeden aus dem Panzerabwehrminenmagazin (30) abgesetzten Panzerabwehrmine (40) zum Wiederauffinden derselben abrufbar sind.

6. Verfahren nach einem der vorhergehenden Ansprüche,
**dadurch gekennzeichnet, dass**
dass das Luftfahrzeug (1) nach dem Absetzen einer letzten Panzerabwehrmine (40) aus dem Panzerabwehrminenmagazin (30) an einer letzten Absetzposition (50.n) autonom zu einer Lagerstätte (60) für Panzerabwehrminenmagazine (30) zurück fliegt, um dort das verbrauchte Magazin (30) bevorzugt automatisiert durch Betätigen der Magazin-Kopplungseinrichtung (22) abzulegen und bevorzugt automatisiert ein neues Magazin (30) aufzunehmen.

7. Verfahren nach einem der vorhergehenden Ansprüche,
**dadurch gekennzeichnet, dass**
dass die Positionsdaten der vorgegebenen Absetzpositionen (50.1 bis 50.n) der Panzerabwehrminen (40) in einem befüllten Magazin (30) in einer Steuerungseinrichtung (28) des Luftfahrzeugs (1) abspeicherbar sind, und dass das Luftfahrzeug (1) abgespeicherte Absetzpositionen (50.1 bis 50.n) auf der Basis der abgespeicherten Positionsdaten autonom nacheinander anfliegt und an jeder der Absetzpositionen (50.1 bis 50.n) eine der Panzerabwehrminen (40) aus dem Panzerabwehrminenmagazin (30) gemäß den Verfahrensschritten c) bis d) absetzt.

8. Verfahren nach Anspruch 7,
**dadurch gekennzeichnet, dass**
die Positionsdaten für die Absetzpositionen (50.1 bis 50.n) aus Bilddaten errechnet werden, die mit einer am Luftfahrzeug (1) oder an einem weiteren Luftfahrzeug (1) angeordneten Kamera erfasst werden.

9. Verfahren nach einem der vorhergehenden Ansprüche,
**dadurch gekennzeichnet, dass**
das Magazin (30) an der Unterseite des Luftfahrzeugs (1) aufnehmbar ist, und dass die Magazin-Kopplungseinrichtung (2) einen motorisch betätigbaren Greifer, Haken oder einen elektrisch aktivierbaren Magneten umfasst, welcher form- und/oder reibschlüssig mit dem Gehäuse (32) des Magazins (30) koppelbar ist, und dass das Luftfahrzeug (1) zum Aufnehmen des Magazins (30) über dieses bewegt, abgesenkt und die Magazin-Kopplungseinrichtung (22) betätigt wird.

10. Unbemanntes hochautomatisiertes und senkrechtstartfähiges Luftfahrzeug (1) zur Durchführung des Verfahrens nach einem der vorhergehenden Ansprüche, umfassend einen Rumpf (4) mit einer Vielzahl von daran angeordneten, jeweils durch einen Motor (5) antreibbaren Propellern, (5a), ein mit dem Rumpf (4) über eine Magazin-Kopplungseinrichtung (22) insbesondere Greifereinrichtung mechanisch koppelbares Panzerabwehrminenmagazin (30), welches ein Gehäuse (32) mit einer Vielzahl von darin angeordneten Minen-Aufnahmeplätzen (34) für jeweils eine Panzerabwehrmine (40) umfasst, wobei jedem Minen-Aufnahmeplatz (34) jeweils eine durch eine Steuerungseinrichtung (28) betätigbare Minenfreigabeeinrichtung (36) zugeordnet ist, die dazu eingerichtet ist, eine an einem Aufnahmeplatz (34) im Panzerabwehrminenmagazin (30) aufgenommene Panzerabwehrmine (40) für den Transport mechanisch mit dem Panzerabwehrminenmagazin (30) zu koppeln und zum Absetzen der Panzerabwehrmine (40) an einer vorgegebenen Absetzposition (50.1, 50.n) von diesem zu entkoppeln, sowie eine Magazin-Kopplungseinrichtung (22), die dazu eingerichtet ist, ein befülltes Magazin (30) für den Transport mit dem Rumpf (4) des Luftfahrzeugs (1) zu koppeln, und/oder ein entleertes Magazin (30) von diesem zu entkoppeln.
